# EUROPEAN PATENT APPLICATION

(11) **EP 1 739 400 A1**
(43) Date of publication of application: **03.01.2007**
(21) Application number: 06114791.4
(22) Date of filing: 31.05.2006
(51) Int. Cl.: G01L 1/24, G01M 11/08

(54) **Fiber optic impact sensing system and method of using same**

(30) Priority: 29.06.2005 US 169607
(71) Applicant: Lockheed Martin Corporation, Dallas TX 75265-0003 (US)
(72) Inventor: HUNN, David L., Kennedale, TX 76060 (US)
(74) Representative: Schmitz, Jean-Marie

(57) **Abstract**

A fiber optic impact sensing system includes a light source, an optical detector, and a sensing optical fiber optically coupled with the light source and the optical detector, the sensing optical fiber being operably associated with an outer surface of a structure. An apparatus includes a structure having an outer surface and a fiber optic impact sensing system operably associated with the outer surface of the structure. The fiber optic impact sensing system includes a light source, an optical detector, and a sensing optical fiber optically coupled with the light source and the optical detector. A method includes operably associating a sensing optical fiber with an outer surface of a structure, monitoring an optical output of the sensing optical fiber, and determining whether an amplitude of the optical output is above or below a predetermined threshold value.

## Description

### BACKGROUND

### 1. Field of the Invention

The present invention relates to a system and method for sensing an impact. In particular, the present invention relates to a fiber optic impact sensing system and a method for using the sensing system.

### 2. Description of Related Art

As those of ordinary skill in the art appreciate, it is important to avoid mechanically damaging pressure vessels and other structural members. It is, however, inevitable that some damage will occur to such members during use. Sometimes it is not known that damage has occurred to a structural member. In such situations, the structure may fail upon use without warning. At other times, it may be known that damage has occurred but it is not known whether the damage is extensive enough to compromise the structural integrity of the member. Often, sophisticated testing isrequired to determine whether the member is structurally sound for its intended purpose. Accordingly, it is often desirable to monitor the structural "health" of such members so that the likelihood of a catastrophic failure can be minimized.

The structural integrity of composite members, such as those made from materials comprising strands or filaments of structural fibers disposed in a polymeric matrix, may be particularly compromised if such a member is mechanically damaged. Optical sensor arrays have been developed that can be embedded at discrete locations within a composite member to measure the internal strain of the member during use. Such sensors, however, provide no information as to the structural health of the member prior to use, because an unacceptable strain level may only be encountered during use. Moreover, these sensors fail to provide any information concerning external, impact-induced damage because they are disposed within the member.

While there are many such sensors well known in the art, considerable room for improvement remains.

### SUMMARY OF THE INVENTION

In one aspect of the present invention, a fiber optic impact sensing system is provided. The system includes a light source, an optical detector, and a sensing optical fiber optically coupled with the light source and the optical detector, the sensing optical fiber being operably associated with an outer surface of a structure.

In another aspect of the present invention, an apparatus is provided. The apparatus includes a structure having an outer surface and a fiber optic impact sensing system operably associated with the outer surface of the structure. The fiber optic impact sensing system includes a light source, an optical detector, and a sensing optical fiber optically coupled with the light source and the optical detector.

In yet another aspect of the present invention, a method of sensing an impact is provided. The method includes operably associating a sensing optical fiber with an outer surface of a structure, monitoring an optical output of the sensing optical fiber, and determining whether an amplitude of the optical output is above or below a predetermined threshold value.

The present invention provides significant advantages, including: (1) the ability to determine the structural health of a member prior to its use; and (2) the ability to sense an external impact to the member that may induce damage to the member.

Additional objectives, features and advantages will be apparent in the written description which follows.

### DESCRIPTION OF THE DRAWINGS

The novel features believed characteristic of the invention are set forth in the appended claims. However, the invention itself, as well as, a preferred mode of use, and further objectives and advantages thereof, will best be understood by reference to the following detailed description when read in conjunction with the accompanying drawings, in which the leftmost significant digit(s) in the reference numerals denote(s) the first figure in which the respective reference numerals appear, wherein:
Figure 1 is a stylized, schematic representation of a first illustrative embodiment of a fiber optic impact sensing system according to the present invention, as applied to a pressure vessel;
Figures 2A-2C are graphical representations of the light amplitude detected by a detector of the present fiber optic impact sensing system over a period of time in which an impact occurs for various scenarios;
Figure 3 is a cross-sectional view, taken along the line 3-3 of Figure 1, of a portion of the pressure vessel and an illustrative embodiment of a sensing optical fiber of the fiber optic impact sensing system of Figure 1, illustrating one particular placement configuration of the sensing optical fiber according to the present invention;
Figures 4A-4C are cross-sectional views, corresponding to the view of Figure 3, illustrating alternative placement configurations of the sensing optical fiber according to the present invention;
Figure 5 is a stylized, schematic representation of a second illustrative embodiment of a fiber optic impact sensing system according to the present invention, as applied to a pressure vessel;
Figure 6 is a stylized, schematic representation of a third illustrative embodiment of a fiber optic impact sensing system according to the present invention, as applied to a pressure vessel; and
Figure 7 is a stylized, top, plan view of the sensing optical fiber of the present invention applied to an alternative structure.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF THE PREFERRED EMBODIMENT

Illustrative embodiments of the invention are described below. In the interest of clarity, not all features of an actual implementation are described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The present invention represents a system for optically sensing an impact to a member. The system includes one or more sensing optical fibers disposed proximate an outer surface of the member. Light is propagated through the one or more sensing optical fibers. If the member suffers an impact, the sensing optical fibers are compromised to an extent corresponding to the intensity of the impact, resulting in a corresponding decrease in the amplitude of light propagated through the sensing optical fibers. The level of propagated light is monitored to determine if an impact has occurred and the magnitude of the impact.

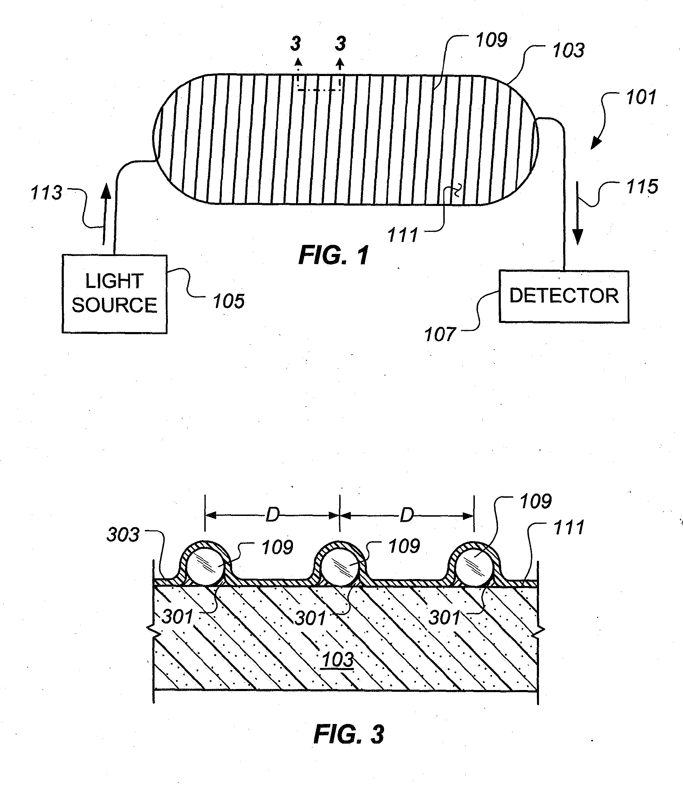

Figure 1 depicts a first illustrative embodiment of a fiber optic impact sensing system 101 according to the present invention, as applied to an exemplary pressure vessel 103. Note that while the present invention is described herein as be applied to a pressure vessel, the present invention is not so limited. Rather, the scope of the present invention encompasses the application of the present invention to any structure, member, device, or apparatus. In its most basic form, the sensing system 101 includes a light source 105, a detector 107, and a sensing optical fiber 109 extending from light source 105 to detector 107. Sensing optical fiber 109 is disposed proximate an outer surface 111 of pressure vessel 103. Light from light source 105 propagates through sensing optical fiber 109 to detector 107, as indicated by arrows 113, 115. Note that light emitted from light source 105 may exhibit wavelengths within the human visual spectrum or may exhibit wavelengths outside the human visible spectrum.

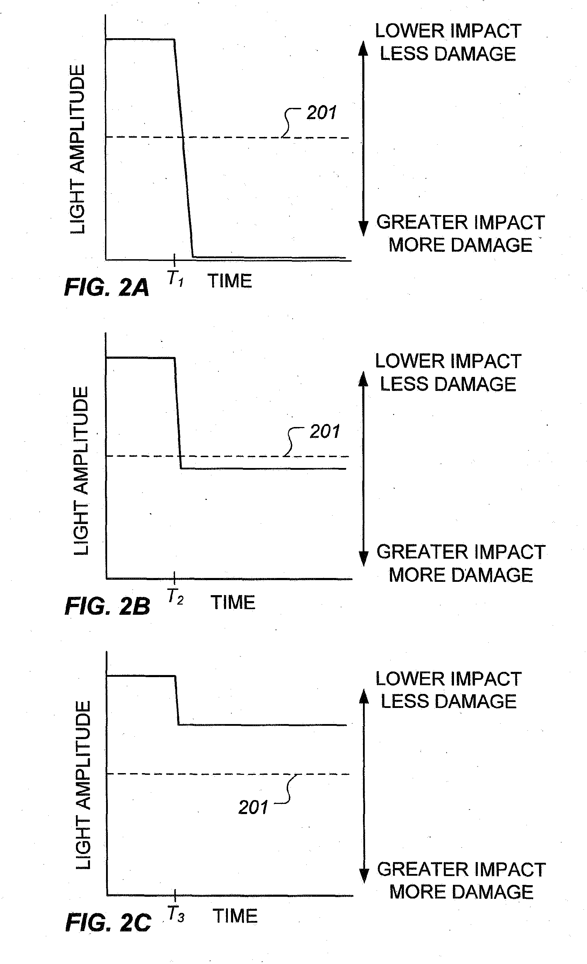

Generally, if pressure vessel 103 sustains an impact, sensing optical fiber 109 will be damaged to some degree corresponding to the intensity of the impact. The amount of damage to sensing optical fiber 109 is, in general, inversely proportional to the amplitude of light propagated through sensing optical fiber 109. Figures 2A-2C illustrate three particular exemplary scenarios that might be encountered during the operation of sensing system 101. Each of Figures 2A-2C provides a graphical representation of the light amplitude detected by detector 107 over a period of time in which an impact occurs. Also, shown in each of Figures 2A-2C is a graphical representation of a predetermined threshold value 201. Light amplitudes detected by detector 107 that are greater than threshold value 201 are interpreted as resulting from impacts that will not structurally compromise pressure vessel 103 and are, thus, acceptable. It should be noted that light amplitudes detected by detector 107 may be considered acceptable if they are greater than the threshold 201 within a certain tolerance band, or, in other words, greater than about the threshold 201. Light amplitudes detected by detector 107 that are less than threshold 201 are considered unacceptable, as the light amplitudes correspond to impacts that may structurally compromise pressure vessel 103. Note that light amplitudes detected by detector 107 may be considered unacceptable if they are less than the threshold 201 within a certain tolerance band, or, in other words, less than about the threshold 201.

Figure 2A illustrates a scenario wherein pressure vessel 103 sustains an impact of sufficient magnitude to severely damage sensing optical fiber 109. In this example, sensing optical fiber 109 is damaged at about time *T₁* to a degree that little light is propagated therethrough and detected by detector 107. The light amplitude detected by detector 107 after time *T₁* falls well below threshold value 201. Accordingly, the structural integrity of pressure vessel 103 has been sufficiently compromised due to the impact that pressure vessel 103 must be replaced or repaired. Detector 107 is operable to provide an indication that a significant impact has occurred.

Figure 2B illustrates a situation wherein pressure vessel 103 sustains an impact of sufficient magnitude to damage sensing optical fiber 109 to a lesser degree than shown in Figure 2A. In this example, sensing optical fiber 109 is damaged at about time *T₂* such that the light amplitude detected by detector 107 falls just below threshold value 201. Even though sensing optical fiber 109 is not as severely damaged as in the example of Figure 2A, the light amplitude detected by detector 107 indicates that the structural integrity of pressure vessel 103 has been sufficiently compromised to warrant replacement or repair. Detector 107 is operable to provide an indication that a significant impact has occurred.

Figure 2C illustrates a scenario wherein pressure vessel 103 sustains an impact of sufficient magnitude to damage sensing optical fiber 109 but to a lesser degree than shown in Figure 2B. In this example, sensing optical fiber 109 is damaged at about time *T*₃ such that the light amplitude detected by detector 107 falls above threshold value 201. Even though sensing optical fiber 109 is somewhat damaged, the light amplitude detected by detector 107 indicates that the structural integrity of pressure vessel 103 has not been sufficiently compromised to warrant replacement or repair. Detector 107 is operable to provide an indication that an insignificant impact has occurred.

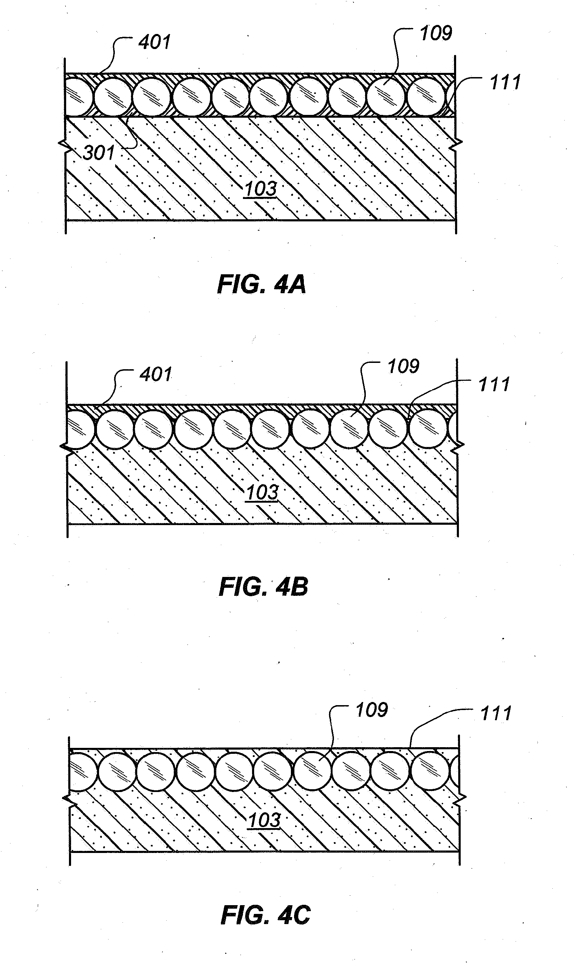

Figure 3 depicts one particular arrangement of sensing optical fiber 109 on outer surface 111 of pressure vessel 103. In the illustrated configuration, sensing optical fiber 109 is generally helically wrapped around outer surface 111 of pressure vessel 103. Adjacent portions of sensing optical fiber 109 are spaced apart by a predetermined distance D. In one embodiment, distance D is determined by evaluating the possible sources of impact to pressure vessel 103. In this embodiment, distance D is smaller than the smallest object deemed likely to impact and damage pressure vessel 103.

In the embodiment of Figure 3, sensing optical fiber 109 is bonded to outer surface 111 of pressure vessel 103 by a resin or adhesive 301. Many composite pressure vessels such as pressure vessel 103 are fabricated using a filament winding process. In one embodiment, sensing optical fiber 109 is applied to outer surface 111 of pressure vessel 103 during the filament winding process, such that resin is applied to sensing optical fiber 109 prior to being applied to outer surface 111. When assembled pressure vessel 103 is cured, sensing optical fiber 109 is bonded to outer surface 111. In the embodiment illustrated in Figure 3, a thin, protective covering or layer 303 is disposed over sensing optical fiber 109 to protect sensing optical fiber 109 from incidental damage. Protective layer 303 may comprise, for example, a paint or a syntactic foam.

Figure 4A provides an illustrative embodiment alternative to that of Figure 3. In the illustrated embodiment, sensing optical fiber 109 is generally helically wound about pressure vessel 103 such that adjacent portions of sensing optical fiber 109 are substantially adjacent to one another. This configuration provides optimum coverage of pressure vessel 103 for monitoring an impact thereto. Protective layer 401 is disposed over sensing optical fiber 109 to protect sensing optical fiber 109 from incidental damage. In various embodiments, protective layer 401 may comprise the materials discussed above concerning protective layer 303. In other respects, the embodiment of Figure 4 generally corresponds to that of Figure 3.

As shown in Figure 4B, sensing optical fiber 109 may partially extend into pressure vessel 103, especially if co-applied using a filament winding process. In such embodiments, protective layer 401 may be disposed over sensing optical fiber 109, as discussed above. It should be noted that adjacent portions of sensing optical fiber 109 may be substantially adjacent, as shown in Figure 4B, or may be spaced apart, corresponding to the configuration shown in Figure 3.

As shown in Figure 4C, sensing optical fiber 109 may be fully embedded in pressure vessel 103 but proximate outer surface 111 of pressure vessel 103. In this embodiment, protective layer 401 is not necessary, as sensing optical fiber 109 is disposed below outer surface 111 of pressure vessel 103. It should be noted that adjacent portions of sensing optical fiber 109 may be substantially adjacent, as shown in Figure 4C, or may be spaced apart, corresponding to the configuration shown in Figure 3. Thus, as depicted in Figures 4B and 4C, sensing optical fiber 109 may be integral with a structure, *e.g.,* pressure vessel 103.

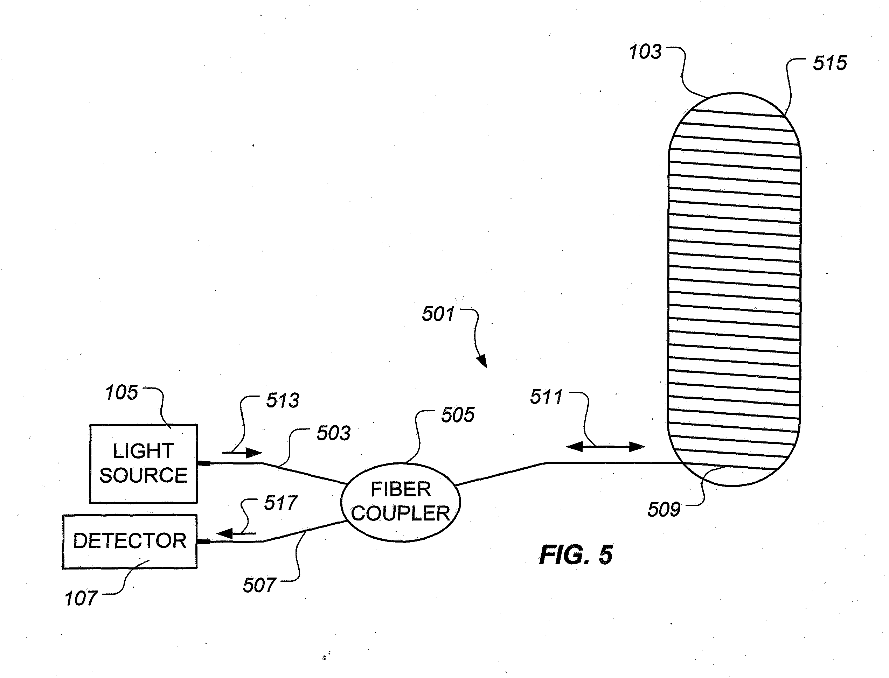

Figure 5 depicts a second, illustrative embodiment of a fiber optic impact sensing system 501 according to the present invention. In this embodiment, light source 105 is optically coupled by an optical fiber 503 to a fiber coupler 505. Detector 107 is optically coupled by an optical fiber 507 to fiber coupler 505. Fiber coupler 505 optically combines optical fibers 503, 507 into a single, sensing optical fiber 509. Sensing optical fiber 509 is a "duplex" or "bidirectional" optical fiber, allowing light to independently propagate in two directions, as indicated by arrow 511. Fiber coupler 505 is optically coupled with sensing optical fiber 509.

Light is emitted from light source 105 and propagates (as indicated by arrow 513) through optical fiber 503 to fiber coupler 505. The light is then propagated through sensing optical fiber 509 to a distal end 515 of sensing optical fiber 509, where it is reflected. The reflected light then propagates through sensing optical fiber 509 to fiber coupler 505, where the reflected light is directed into optical fiber 507. The reflected light propagates through optical fiber 507 (as indicated by arrow 517) to detector 107,
where the amplitude of the reflected light is detected.

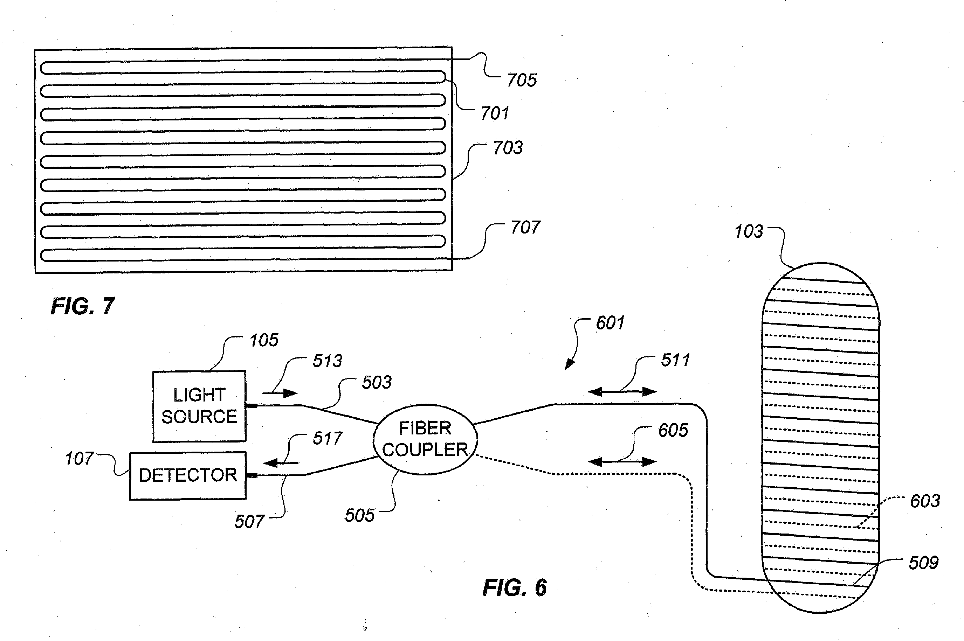

Figure 6 depicts a third illustrative embodiment of a fiber optic impact sensing system 601 according to the present invention. Sensing system 601 is substantially identical to sensing system 501 of Figure 5 except a second sensing optical fiber 603 (shown as a broken line in Figure 6) is included to provide a redundant sensing capability. Light from light source 105 propagates bidirectionally through both sensing optical fibers 509, 603, as indicated by arrows 511, 605. Detector 107 detects the reflected light amplitude from both sensing optical fibers 509, 603. Note that adjacent portions of sensing optical fibers 509, 603 may be spaced apart, as in the embodiment of Figure 3, or substantially adjacent, as in the embodiment of Figure 4.

As discussed above, the fiber optic impact sensing system of the present invention may be used with any desired structure. For example, as depicted in Figure 7, a sensing optical fiber 701 may be applied to an outer surface of a structure 703 in any suitable manner. Light source 105 and detector 107 (not shown in Figure 7) may be attached to ends 705, 707 of sensing optical fiber 701 and operated as described relative to Figure 1. Alternatively, sensing optical fiber 701 may be optically coupled with fiber coupler 505 of Figures 5 and 6 and operated as described above. In such an embodiment, sensing optical fiber 701 comprises a duplex or bidirectional sensing optical fiber. Note that structure 703 may comprise any structural polymeric, metallic, or composite material.

In various embodiments, sensing optical fiber 109, 509, 603, 701 may extend over all, substantially all, or only a portion or portions of a structure, e.g., pressure vessel 103, structure 703, or the like. For example, if it is desirable to monitor impacts to only a portion of a structure, sensing optical fiber 109, 509, 603, 701 only need be applied to that portion of the structure.

Note that a plurality of sensing optical fibers 701 may be applied to a structure (e.g., pressure vessel 103, structure 703, or the like) in a "patchwork" fashion or in some other geometric configuration so that impacts to all, substantially all, or certain portions of the structure may be detected. In such embodiments, ends 705, 707 of sensing optical fiber 701 may be optically coupled with other respective ends 705, 707 of sensing optical fibers 701 such that a single light source 105 and a single detector 107 are employed. Alternatively, separate light sources 105 and separate detectors 107 may be optically coupled with ends 705, 707.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope and spirit of the invention. Accordingly, the protection sought herein is as set forth in the claims below. It is apparent that an invention with significant advantages has been described and illustrated. Although the present invention is shown in a limited number of forms, it is not limited to just these forms, but is amenable to various changes and modifications without departing from the spirit thereof.

## Claims

1. A fiber optic impact sensing system, comprising:
a light source;
an optical detector; and
a sensing optical fiber optically coupled with the light source and the optical detector, the sensing optical fiber being operably associated with an outer surface of a structure.

2. The fiber optic impact sensing system, according to claim 1, wherein the light source is optically coupled with a first end of the sensing optical fiber and the optical detector is optically coupled with a second end of the sensing optical fiber.

3. The fiber optic impact sensing system, according to claim 1, further comprising:
a fiber coupler optically coupled with the light source, the optical detector, and the sensing optical fiber,
wherein the sensing optical fiber is a bidirectional optical fiber.

4. The fiber optic impact sensing system, according to claim 3, further comprising a second, bidirectional sensing optical fiber optically coupled with the fiber coupler and operably associated with the outer surface of the structure.

5. The fiber optic impact sensing system, according to claim 1, further comprising:
a cover for protecting the sensing optical fiber.

6. The fiber optic impact sensing system, according to claim 5, wherein the cover comprises:
one of a paint layer and a layer of syntactic foam.

7. The fiber optic impact sensing system, according to claim 1, wherein the optical detector is operable to compare a predetermined threshold value to an amplitude of light outputted from the sensing optical fiber.

8. The fiber optic impact sensing system, according to claim 7, wherein the optical detector is operable to provide an indication of a significant impact if the amplitude of light outputted from the sensing optical fiber is less than about the predetermined threshold value.

9. The fiber optic impact sensing system, according to claim 7, wherein the optical detector is operable to provide an indication of an insignificant impact if the amplitude of light outputted from the sensing optical fiber is greater than about the predetermined threshold value.

10. An apparatus, comprising:
a structure having an outer surface; and
a fiber optic impact sensing system operably associated with the outer surface of the structure, the fiber optic impact sensing system comprising:
a light source;
an optical detector; and
a sensing optical fiber optically coupled with the light source and the optical detector.

11. The apparatus, according to claim 10, wherein the sensing optical fiber is disposed proximate the outer surface of the structure.

12. The apparatus, according to claim 10, wherein the sensing optical fiber is attached to the outer surface of the structure.

13. The apparatus, according to claim 10, further comprising a protective layer disposed over the sensing optical fiber.

14. The apparatus, according to claim 10, wherein the light source is optically coupled with a first end of the sensing optical fiber and the optical detector is optically coupled with a second end of the sensing optical fiber.

15. The apparatus, according to claim 10, further comprising:
a fiber coupler optically coupled with the light source, the optical detector, and the sensing optical fiber,
wherein the sensing optical fiber is a bidirectional optical fiber.

16. The apparatus, according to claim 15, further comprising a second, bidirectional sensing optical fiber optically coupled with the fiber coupler and operably associated with the outer surface of the structure.

17. The fiber optic impact sensing system, according to claim 10, wherein the optical detector is operable to compare a predetermined threshold value to an amplitude of light outputted from the sensing optical fiber.

18. The fiber optic impact sensing system, according to claim 17, wherein the optical detector is operable to provide an indication of a significant impact if the amplitude of light outputted from the sensing optical fiber is less than about the predetermined threshold value.

19. The fiber optic impact sensing system, according to claim 17, wherein the optical detector is operable to provide an indication of an insignificant impact if the amplitude of light outputted from the sensing optical fiber is greater than about the predetermined threshold value.

20. The fiber optic impact sensing system, according to claim 10, wherein the sensing optical fiber is integral with the structure.

21. A method of sensing an impact, comprising:
operably associating a sensing optical fiber with an outer surface of a structure;
monitoring an optical output of the sensing optical fiber; and
determining whether an amplitude of the optical output is above or below a predetermined threshold value.

22. The method, according to claim 21, further comprising:
indicating that a significant impact has occurred if the amplitude of light outputted from the sensing optical fiber is less than about the predetermined threshold value.

23. The method, according to claim 21, further comprising:
indicating that an insignificant impact has occurred if the amplitude of light outputted from the sensing optical fiber is greater than about the predetermined threshold value.
